# FASCICULE DE BREVET EUROPEEN

(11) **EP 0 840 029 B1**
(45) Date de publication et mention de la délivrance du brevet: **17.07.2002**
(21) Numéro de dépôt: 97402513.2
(22) Date de dépôt: 23.10.1997
(51) Int. Cl.: F16D 55/36

(54) **Agencement de disques de frein en carbone pour unité de freinage d'aéronef, et procédé d'assemblage de disques selon un tel agencement**
Anordnung von Kohlenstoffbremsscheiben für eine Bremseinheit für Luftfahrzeuge sowie Verfahren zur Montage von Scheiben gemäss einer solchen Anordnung
Arrangement of carbon brake discs for an aircraft brake unit and assembly method for discs according to such an arrangement

(30) Priorité: 31.10.1996 FR 9613338
(43) Date de publication de la demande: 06.05.1998
(73) Titulaire: MESSIER BUGATTI, 78140 Velizy Villacoublay (FR)
(72) Inventeur: Souetre, Jean, 75015 Paris (FR)
(74) Mandataire: Jaunez, Xavier

(56) Documents cités:
- CA-A- 2 004 091
- US-A- 4 742 895
- US-A- 5 323 880
- US-A- 5 551 534

## Description

La présente invention est du domaine des freins à disques en carbone, et concerne plus particulièrement le mode d'arrangement des disques de frein en carbone pour une unité de freinage d'aéronef.

Une unité de freinage d'aéronef comporte habituellement une alternance de stators couplés à un tube de torsion et de rotors couplés à la roue concernée, avec un stator latéral avant à une extrémité du côté d'une couronne de freinage équipée de pistons capables d'une course d'usure prédéterminée, et un stator latéral arrière à l'autre extrémité.

Le but recherché par les constructeurs de telles unités de freinage à disques en carbone est d'optimiser le degré d'usure de chaque disque individuel tout en restant dans un encombrement axial aussi faible que possible, avec une course d'usure minimale pour les pistons de la couronne de freinage. Durant ces dernières années, les constructeurs d'unités de freinage se sont efforcés de déterminer des agencements de disques et des modes de substitution de ces disques permettant, après un certain temps de fonctionnement, de réutiliser une partie des disques de façon à augmenter la durée d'utilisation des disques utilisés.

Les documents US-A-4,613,017 et US-A-4,742,895 illustrent ainsi un mode de remplacement partiel des disques de frein. Ces documents exposent qu'on utilisait auparavant une unité de freinage comportant une couronne équipée de pistons capables d'une longue course d'usure prédéterminée, et qu'une fois cette course d'usure atteinte, on procédait au remplacement complet des rotors et des stators composant l'unité de freinage. Ces brevets enseignent qu'il est alors plus intéressant d'utiliser des rotors plus épais que les stators, et deux stators d'extrémité plus minces que les stators centraux de l'ensemble de disques. Une fois atteinte une course d'usure prédéterminée, représentant entre 50 et 65 % de la course d'usure de l'art antérieur, les rotors très épais sont réusinés sur leurs deux faces d'usure et ils sont conservés dans le nouvel ensemble de disques de remplacement qui inclut alors de nouveaux stators plus épais, de façon à retrouver sensiblement la longueur totale de départ pour l'ensemble des disques, et à pouvoir fonctionner avec une nouvelle course d'usure après réinitialisation des ensembles de pistons. Un tel enseignement permet ainsi d'utiliser deux fois les rotors, après un resurfaçage adéquat, et de ne remplacer que les stators de l'unité de freinage. On use ainsi de façon importante chaque disque individuel tout en conservant une course d'usure faible, grâce à l'affectation de plusieurs "vies" pour les disques de l'unité de freinage.

Cette technique présente l'avantage d'un bon équilibrage du puits de chaleur, mais présente l'inconvénient d'un réusinage de toutes les faces en contact lors du remplacement des stators après une première course d'usure de pistons, afin d'éviter des contacts face neuve / face usée entre les disques adjacents, ce qui induit une perte coûteuse de carbone.

Une technique analogue est décrite dans le document US-A-5,551,534 avec un agencement incluant, entre une plaque fixe de pression du côté des pistons de la couronne de freinage et un stator latéral arrière, des disques épais (aux deux extrémités et au centre de l'empilement) et des disques minces. Il est à noter que les deux disques épais des extrémités, dont celui qui est adjacent à la plaque de pression, sont des rotors. Au bout d'une demi-vie, les disques épais sont déplacés dans l'empilement pour être utilisés comme disques minces, et les disques minces sont soit mis au rebut, soit associés entre eux pour constituer de nouveaux disques épais. On retrouve les inconvénients mentionnés pour les documents précédents.

Un autre mode de remplacement est enseigné dans le document US-A-5,323,880. Selon cette technique, on effectue un remplacement pas à pas en décalant progressivement des groupes de disques usés vers l'arrière, en déposant les disques les plus en arrière (du côté de la plaque de réaction) qui sont les plus usés, et en remettant du côté avant (du côté de l'ensemble de piston de freinage) un nouveau groupe de disques présentant une épaisseur importante. Ces derniers disques épais se décalent ainsi progressivement de l'avant vers l'arrière au fur et à mesure des substitutions après chaque course d'usure des pistons, ce qui permet de leur faire remplir plusieurs "vies" jusqu'à ce qu'ils soient très usés du côté arrière où ils sont alors déposés. Une technique analogue est décrite dans le document CA-A-2.004.091.

Cette technique de substitution avec translation présente l'avantage d'une durée d'utilisation importante pour les disques, tout en conservant les faces appairées des disques faisant partie d'un groupe de remplacement, ce qui permet d'éviter des reprises d'usinage et par suite les inconvénients précités de perte de carbone. Cependant, un tel agencement n'est pas toujours satisfaisant sur le plan de l'équilibrage thermique du puits de chaleur, dans la mesure où l'on trouve des disques très épais du côté avant et des disques très minces du côté arrière. Ceci est d'autant plus sensible que les disques très épais sont disposés dans une zone qui est moins sensible à l'échauffement, du fait de sa ventilation, que celles des disques très minces disposés en arrière de la série de disques.

L'invention vise à améliorer les techniques qui viennent d'être rappelées, en optimisant le degré d'usure des disques de carbone et en favorisant autant que faire se peut les réutilisations de disques usés après une première période d'utilisation, c'est-à-dire une fois atteinte la course d'usure prédéterminée des pistons.

L'invention a ainsi pour objet de concevoir un agencement de disques de frein en carbone qui permette une usure optimale de chaque disque individuel tout en restant dans une course axiale totale minimale, avec un équilibrage thermique satisfaisant du puits de chaleur.

Ce problème est résolu conformément à l'invention, grâce à un agencement de disques de frein en carbone pour unité de freinage d'aéronef comportant une alternance de stators couplés à un tube de torsion et de rotors couplés à la roue concernée et formant un groupe central de rotors et de stators, avec un stator latéral avant à une extrémité du côté d'une couronne de freinage équipée de pistons capables d'une course d'usure prédéterminée et un groupe arrière comportant au moins un stator latéral arrière à l'autre extrémité, ledit agencement étant caractérisé en ce qu'un disque de calage en carbone couplé au tube de torsion est inséré entre le stator latéral avant et la couronne de freinage, l'épaisseur dudit disque de calage étant inférieure à la course d'usure des pistons, et en ce que le stator latéral avant, le groupe central de rotors et de stators et le groupe arrière ont un état d'usure variable entre un premier état correspondant à une course d'usure sensiblement nulle des pistons de la couronne de freinage et dans lequel le stator latéral avant et les rotors et stators du groupe central sont partiellement usés, tandis que le groupe arrière est non usé, et un deuxième état correspondant à une course d'usure maximale des pistons de la couronne de freinage et dans lequel le stator latéral avant et les rotors et stators du groupe central sont très usés, tandis que le groupe arrière est partiellement usé, conformément à la partie caractérisante de la revendication 1.

Ainsi, le stator latéral avant et les rotors et stators du groupe central sont utilisés pour deux configurations successives, ce qui permet de conserver tels quels ces disques, avec l'appairage de leurs surfaces de contact. De plus, le fait de prévoir un disque de calage d'épaisseur inférieure à la course d'usure des pistons permet d'optimiser l'équilibrage thermique du puits de chaleur, tout en maintenant les disques du groupe central dans une position axialement médiane, ceci grâce à la combinaison incluant un stator latéral arrière très épais en début d'utilisation pour la seconde configuration.

Conformément à un premier mode d'exécution, le groupe arrière est constitué exclusivement par le stator latéral arrière. Dans ce cas, tous les rotors de l'ensemble de disques font partie du groupe central qui est utilisé pendant deux configurations successives.

En variante, le groupe arrière peut être constitué par le stator latéral arrière et le rotor qui lui est directement adjacent. Plus généralement, on pourra encore décaler l'interface du groupe arrière vers le centre de l'ensemble de disques, mais ce décalage risque d'être plus défavorable sur le plan de la réutilisation des disques. C'est pour cela que, dans la pratique, le groupe arrière inclura tout au plus le rotor qui est directement adjacent au stator latéral arrière, et éventuellement aussi le stator qui est adjacent à ce rotor.

Il est par ailleurs intéressant que le stator latéral arrière soit relié au tube de torsion par l'intermédiaire de pions circonférentiellement répartis, ces pions servant d'organes de reprise de couple. Ceci est rendu possible grâce à la substitution opérée sur le groupe arrière qui permet de rajouter de l'épaisseur, et procure l'avantage de permettre de diminuer l'encombrement axial du tube de torsion, et d'obtenir un gain de place pour la roue.

Il est par ailleurs avantageux que les rotors et stators du groupe central aient la même épaisseur. Ceci permet d'éviter une alternance de disques épais et de disques minces, qui n'est pas favorable sur le plan de l'équilibre thermique.

Conformément à un mode d'exécution particulier, on pourra prévoir que l'un au moins des disques du groupe comportant le disque de calage, le stator latéral avant, et les rotors et stators du groupe central, est constitué de deux demi-disques de même épaisseur, accolés et solidarisés l'un à l'autre. On pourra alors utiliser une technique de "clippage" permettant d'assembler l'un à l'autre deux demi-disques accolés face contre face.

L'invention concerne également un procédé d'assemblage de disques de frein en carbone conformément à un agencement du type précédemment défini, dans lequel on met en place un ensemble de disques comprenant successivement, de l'arrière vers l'avant, un groupe arrière comportant au moins un stator latéral arrière, un groupe central de rotors et de stators, et un stator latéral avant, cette première configuration d'agencement étant conservée jusqu'à ce que la course maximale d'usure des pistons soit atteinte, après quoi on réinitialise les pistons de la couronne de freinage, et on remplace cet ensemble de disques usés par un autre ensemble de disques, ledit procédé étant caractérisé en ce qu'après la réinitialisation des pistons de la couronne de freinage, on met en place un autre ensemble de disques comprenant successivement, de l'arrière vers l'avant, un nouveau groupe arrière dont l'épaisseur est supérieure à l'épaisseur initiale du groupe arrière précédent, le groupe central de rotors et de stators déjà partiellement usés de l'ensemble précédent, le stator latéral avant déjà partiellement usé de l'ensemble précédent, et un disque de calage en carbone dont l'épaisseur est inférieure à la course d'usure des pistons, cette seconde configuration d'agencement étant conservée jusqu'à ce qu'une nouvelle course maximale d'usure des pistons soit atteinte.

Conformément à un premier mode de mise en oeuvre du procédé, le groupe arrière remplacé est constitué exclusivement par le stator latéral arrière.

En variante, le groupe arrière remplacé sera constitué par le stator latéral arrière et le rotor qui lui est directement adjacent.

Il sera en outre avantageux de prévoir qu'en fin d'utilisation dans la seconde configuration, le stator latéral arrière est réusiné sur sa face usée pour pouvoir être réutilisé, dans un autre ensemble de disques, comme stator latéral arrière en début d'utilisation dans la première configuration.

De la même manière, dans le cas d'un groupe arrière remplacé constitué par le stator latéral arrière et le rotor qui lui est directement adjacent, il sera avantageux de prévoir qu'en fin d'utilisation dans la seconde configuration, le rotor qui est directement adjacent au stator latéral arrière est réusiné sur au moins une de ses deux faces usées pour pouvoir être réutilisé, dans un autre ensemble de disques, comme rotor de groupe arrière en début d'utilisation dans la première configuration.

De préférence encore, en fin d'utilisation dans la seconde configuration, l'un au moins des rotors et stators du groupe central est réusiné sur ses deux faces usées pour pouvoir être réutilisé respectivement comme demi-rotor ou demi-stator dans le groupe central d'un autre ensemble de disques en début d'utilisation dans la première configuration.

Il sera également intéressant de prévoir qu'en fin d'utilisation dans la seconde configuration, le stator latéral avant est réusiné sur sa face usée pour pouvoir être réutilisé, dans un autre ensemble de disques, comme demi-stator en début d'utilisation dans la première configuration, ou encore comme disque ou demi-disque de calage en début d'utilisation dans la seconde configuration.

D'autres caractéristiques et avantages de l'invention apparaîtront plus clairement à la lumière de la description qui va suivre et des dessins annexés, concernant un mode de réalisation particulier, en référence aux figures où :

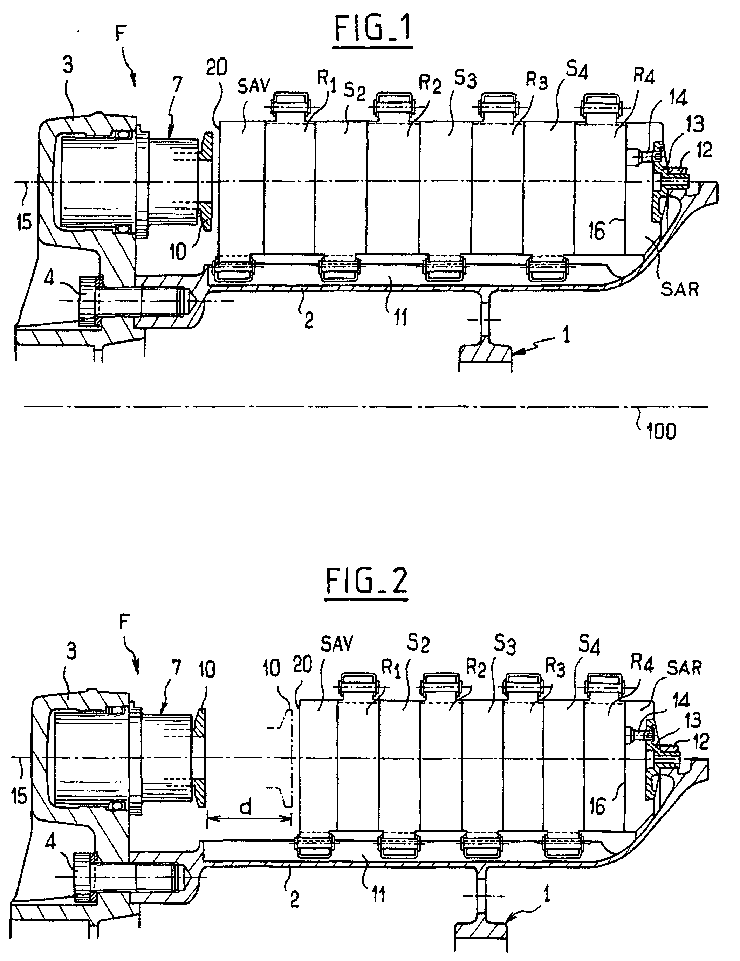

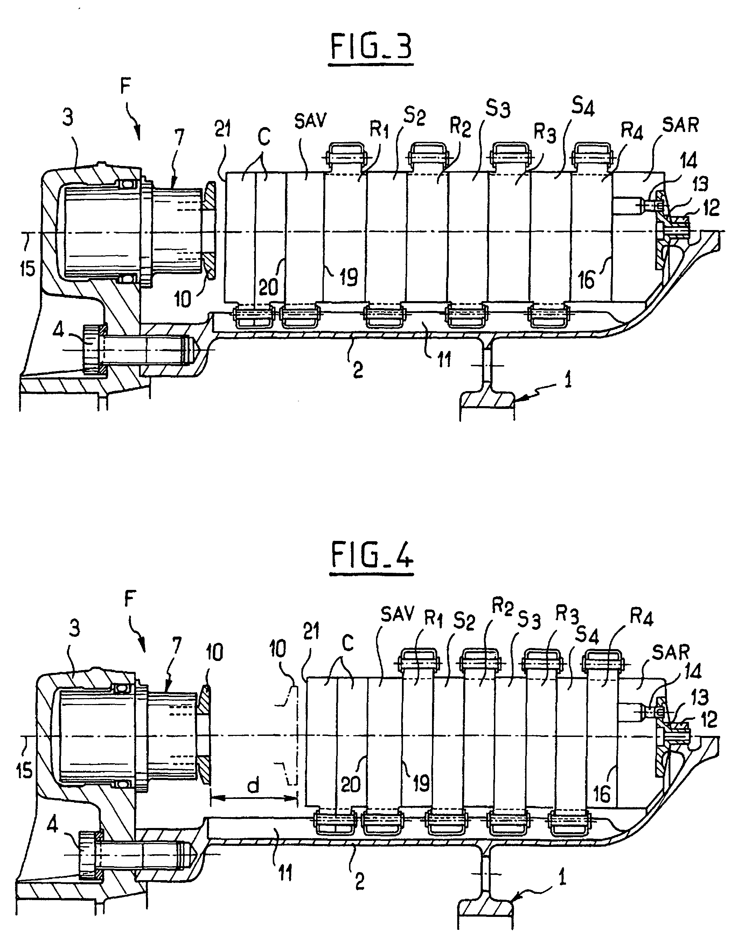

- les figures 1 à 4 illustrent un premier mode d'exécution de l'invention dans lequel l'agencement de disques comporte un groupe central de rotors et stators disposés entre le stator latéral avant et un groupe arrière constitué exclusivement par le stator latéral arrière, respectivement en début d'utilisation dans une première configuration (figure 1), en fin d'utilisation dans cette première configuration (figure 2), en début d'utilisation dans une seconde configuration (figure 3), et en fin d'utilisation dans cette seconde configuration (figure 4) ;

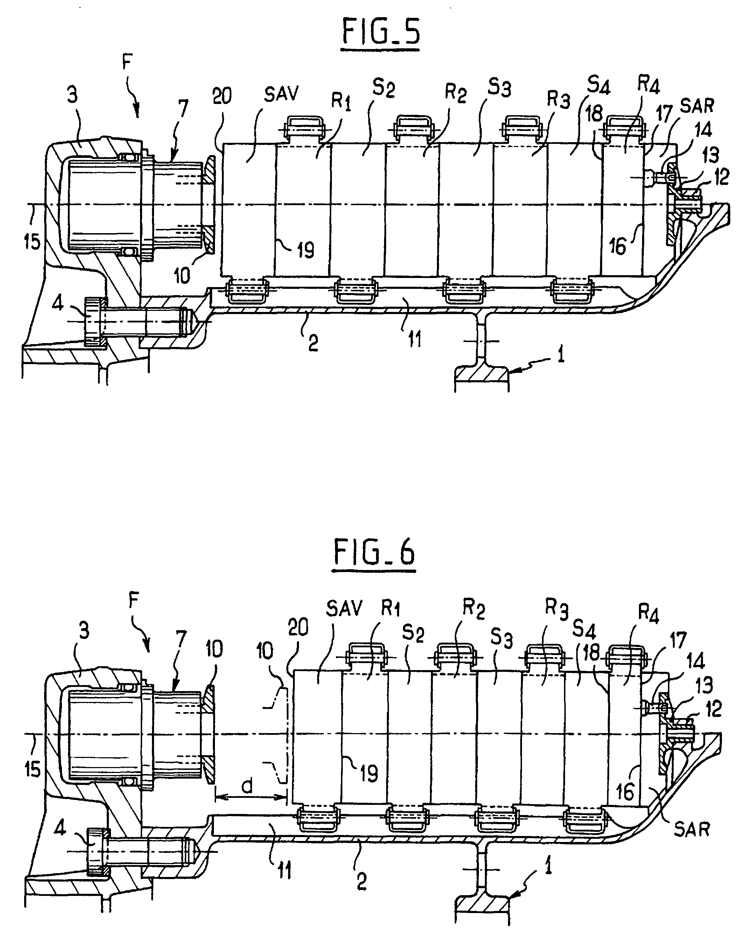

- les figures 5 à 8 illustrent une variante de l'agencement précédent, dans laquelle le groupe arrière inclut non seulement le stator latéral arrière, mais aussi le rotor qui lui est immédiatement adjacent, les quatre figures illustrant de la même façon le début et la fin d'utilisation pour les première et seconde configurations.

Sur les figures 1 à 4, on distingue une unité de freinage d'aéronef F comportant une partie centrale statorique 1 d'axe 100 (l'axe 100 n'est représenté que sur la figure 1), incluant un tube de torsion 2 à l'avant duquel est fixé une couronne de freinage 3, par exemple au moyen de boulons 4, cette couronne étant équipée d'une pluralité d'ensembles de pistons 7 capables d'une course d'usure prédéterminée grâce à un système de rattrapage d'usure qui est de préférence intégré. A cet effet, chaque ensemble de piston 7 peut par exemple être équipé d'un barreau axial fixé par une extrémité à la couronne de freinage 3, et présentant à son autre extrémité une olive sur laquelle passe un tube se déformant de façon irréversible, lequel tube est solidaire du piston proprement dit 10 dont la face active est revêtue d'un isolant de piston en acier inoxydable servant à transmettre les efforts de freinage et à améliorer l'isolation thermique. L'axe de l'ensemble de piston 7 représenté est noté 15.

Le tube de torsion 2 présente une pluralité de tenons axiaux tel que le tenon 11, servant à accoupler un certain nombre de stators, c'est-à-dire en l'espèce le stator latéral avant noté SAV, et les autres stators notés S2, S3, S4 d'un groupe central de disques. Les rotors imbriqués entre ces stators sont notés R1, R2, R3, R4, le dernier rotor R4 étant disposé entre le stator S4 et le stator latéral arrière noté SAR. Il convient de noter que ce dernier stator latéral arrière SAR ne passe pas sur les tenons du tube de torsion comme c'est le cas habituellement, mais est relié audit tube de torsion 2 par l'intermédiaire de pions de reprise de couple 13 qui sont circonférentiellement répartis, ces pions 13 étant fixés par des rivets 14 dans des réservations associées de la face arrière du stator latéral arrière SAR, et accrochés sur une couronne associée 12 rigidement solidaire du tube de torsion 2. On pourra par exemple utiliser douze pions 13 du type de celui qui est représenté.

Conformément à un aspect essentiel de l'invention, l'agencement de disques de frein précité est organisé selon deux configurations correspondant à un fonctionnement pour deux courses d'usure successives des pistons 10.

La première configuration est illustrée sur les figures 1 et 2, la figure 1 représentant l'agencement en début d'utilisation, et la figure 2 ce même agencement en fin d'utilisation, c'est-à-dire une fois atteinte une première course d'usure des pistons.

Sur la figure 1, le piston 10 est séparé de la face en regard 20 du stator latéral avant SAV par un jeu qui est le jeu de défreinage. Au fur et à mesure de l'utilisation de l'unité de freinage, l'ensemble des disques s'use progressivement, les rotors et stators du groupe central s'usant sur leurs deux faces de contact, tandis que le stator latéral avant et le stator latéral arrière ne s'usent que sur leur face qui est en contact avec un rotor. Au fur et à mesure de ces usures, le système de rattrapage de jeu déplace progressivement vers la droite de la figure la face active du piston 10, et, en fin d'utilisation, la course maximale notée d des pistons 10 est atteinte, c'est-à-dire que chaque piston se trouve dans la position schématisée en traits mixtes devant la face 20 du stator latéral avant SAV. Il est intéressant de noter que les rotors R1, R2, R3 et R4 et les stators S2, S3, S4 du groupe central ont ici la même épaisseur. Ceci est favorable sur le plan de l'équilibre thermique du puits de chaleur.

Le passage de la situation de la figure 1 à la situation de la figure 2, c'est-à-dire du début d'utilisation à la fin d'utilisation pour la première configuration des disques, correspond à une usure de l'ensemble des disques de l'unité de freinage. Ainsi, chaque disque individuel est plus mince dans la situation illustrée en figure 2 que dans la situation illustrée en figure 1.

La seconde configuration de l'agencement de disques selon l'invention est illustrée aux figures 3 et 4, qui montrent l'agencement respectivement en début d'utilisation et en fin d'utilisation, c'est-à-dire une fois pleinement utilisée une nouvelle course maximale d'usure des pistons de freinage.

Sur la figure 3, les pistons sont réinitialisés par remplacement de leur tube de déformation, ce qui les ramène dans la situation de la figure 1.

Dans cette seconde configuration, et conformément à un aspect essentiel de l'invention, l'agencement comporte le même stator latéral avant SAV déjà partiellement usé et les mêmes rotors R1, R2, R3, R4 et stators S2, S3, S4 déjà partiellement usés du groupe central, mais agencés entre un disque de calage en carbone C (ici doublé par clippage de deux disques) côté pistons, dont l'épaisseur est choisie inférieure à la course d'usure d des pistons 10, et un nouveau groupe arrière, c'est-à-dire en l'espèce un nouveau stator latéral arrière SAR, dont l'épaisseur totale est supérieure à celle du stator latéral arrière précédent.

L'ensemble de disques en carbone ainsi constitué présente une longueur totale sensiblement identique pour chaque configuration en début d'utilisation, c'est-à-dire que l'ensemble de disques illustré en figure 3 présente une longueur sensiblement identique à celle de l'ensemble de disques illustré en figure 1.

Le groupe central de rotors et stators, ainsi que le stator latéral avant, c'est-à-dire ici un ensemble de huit disques, est ainsi encore utilisé, comme un ensemble unitaire, ce qui permet de conserver l'avantage de l'appairage de leurs surfaces respectives de contact avec leur usure homologue lors de la précédente utilisation. Sur la figure 3, le double disque de calage C porte contre la face externe 20 du stator latéral avant SAV, et la face externe 21 de ce double disque de calage est celle qui est contactée par les pistons 10. Après une nouvelle période d'utilisation, l'ensemble des disques stators et rotors continuent à s'user sur leurs faces de contact, le double disque de calage C ne présentant quant à lui aucune usure, dans la mesure où il est en contact avec le stator latéral avant SAV. En fin d'utilisation, c'est-à-dire une fois atteinte une nouvelle course maximale d'usure identique à la première course maximale d'usure, la situation est alors celle qui est illustrée sur la figure 4. Pendant toute cette période d'utilisation, les disques du groupe central conservent en outre une épaisseur pratiquement identique.

Il est important de noter que le stator latéral arrière SAR est tout d'abord "mince" pour la figure 1, puis "très mince" sur la figure 2, ensuite, après remplacement pour la seconde configuration, il est "très épais" sur la figure 3, et enfin "moyen" sur la figure 4. Dans cette dernière situation, le stator latéral arrière SAR présente encore une épaisseur qui est supérieure à celle du stator latéral arrière mince de la figure 1, c'est-à-dire en début d'utilisation dans la première configuration.

Il va de soi que le nombre de rotors et de stators pourra varier par rapport à la représentation donnée ici, et que l'invention n'est aucunement limitée à un nombre particulier de disques.

A titre indicatif seulement, on peut donner des épaisseurs possibles et leurs variations pour les différents disques de l'ensemble qui vient d'être illustré :
- Figure 1 : l'épaisseur du stator latéral avant SAV est de 26,5 mm, l'épaisseur des rotors R1, R2, R3, R4 et des stators S2, S3, S4 est de 30,6 mm, et l'épaisseur du stator latéral arrière SAR "mince" est de 20,7 mm.
- Figure 2 : les épaisseurs précitées ont diminué pour descendre à 23,4 mm pour le stator latéral avant SAV, 24,3 mm pour les rotors R1, R2, R3, R4 et les stators S2, S3, S4, et 17,5 mm pour le stator latéral arrière SAR qui est alors "très mince".
- Figure 3 : le double disque de calage C totalise une épaisseur de 36,0 mm, et le stator latéral avant SAV garde quant à lui son épaisseur de 23,4 mm, et les rotors R1, R2, R3, R4 et stators S2, S3, S4 leur épaisseur de 24,3 mm, et enfin le nouveau stator latéral arrière SAR "très épais" présente une épaisseur de 30,6 mm.
- Figure 4 : le disque de calage présente naturellement la même épaisseur que précédemment, et l'épaisseur des autres disques a diminué, pour atteindre 20,2 mm pour le stator latéral avant SAV, 18,0 mm pour les rotors R1, R2, R3, R4 et les stators S2, S3, S4, et 27,5 mm pour le stator latéral arrière SAR qui est alors "moyen".

On constatera que la différence de longueur totale entre le début et la fin d'utilisation pour chacune des configurations correspond sensiblement à 50 mm, valeur prédéterminée choisie pour la course d'usure des pistons.

On va maintenant décrire une variante d'exécution illustrée aux figures 5 à 8.

Dans cette variante, on retrouve un grand nombre de composants déjà décrits et qui portent les mêmes références numériques. La principale différence par rapport à l'agencement précédemment décrit en référence aux figures 1 à 4 réside principalement dans le fait que le groupe arrière est maintenant constitué par le stator latéral arrière SAR et le rotor R4 qui lui est directement adjacent.

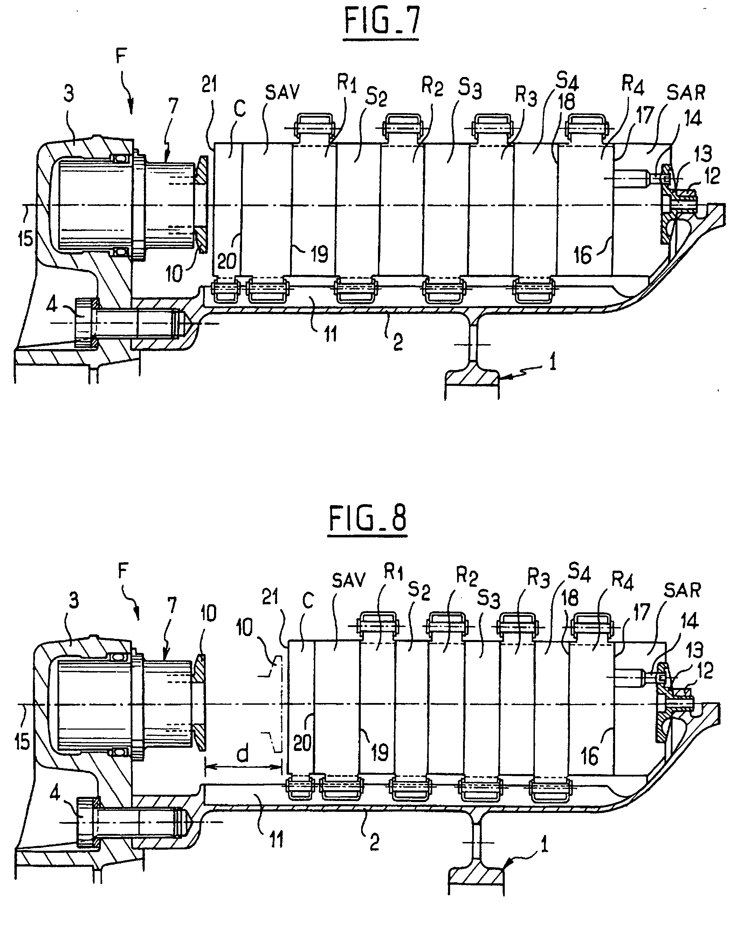

On trouve alors un groupe arrière SAR et R4 qui est "mince" sur la figure 5, c'est-à-dire en début d'utilisation dans la première configuration, "très mince" sur la figure 6, c'est-à-dire en fin de course maximale d'usure dans la première configuration, "très épais" sur la figure 7, c'est-à-dire en début d'utilisation dans la seconde configuration, et enfin "moyen" sur la figure 8, c'est-à-dire en fin de course maximale d'usure dans la seconde configuration. En outre, à la différence du mode d'exécution précédent, on utilise, dans la seconde configuration, un disque unique de calage C, comme cela est visible sur les figures 7 et 8.

Toujours à titre indicatif, on peut mentionner alors les épaisseurs de disques suivantes pour les différentes situations des figures 5 à 8 :
- Figure 5 : le stator latéral avant a une épaisseur de 32,0 mm, les rotors R1, R2, R3 et les stators S2, S3, S4 ont une épaisseur également de 32,0 mm, le rotor R4 faisant partie du groupe arrière a une épaisseur de 24,0 mm (rotor "mince"), et le stator latéral arrière SAR a une épaisseur de 19,1 mm (stator latéral arrière "mince").
- Figure 6 : l'épaisseur du stator latéral avant SAV est devenue 29,0 mm, celle des rotors R1, R2, R3 et des stators S2, S3, S4 du groupe central 26,1 mm ; l'épaisseur du rotor R4 est de 18,1 mm (rotor "très mince") et le stator latéral arrière SAR a une épaisseur de 16,1 mm (stator latéral arrière "très mince").
- Figure 7 : le disque de calage C a une épaisseur de 16,2 mm, le stator latéral avant SAV, ainsi que les rotors R1, R2, R3 et les stators S2, S3, S4 du groupe central ont la même épaisseur qu'à la figure 6, ce qui est normal dans la mesure où ces disques déjà partiellement usés sont conservés dans la deuxième configuration de l'agencement, tandis que le nouveau rotor R4 a une épaisseur de 32,0 mm (rotor "très épais"), et le nouveau stator latéral arrière SAR a une épaisseur de 32,0 mm (stator latéral arrière "très épais").
- Figure 8 : le disque de calage C a naturellement la même épaisseur, et le stator latéral avant SAV a une épaisseur qui est devenue 26,1 mm ; les rotors R1, R2, R3 et les stators S2, S3, S4 du groupe central ont une épaisseur qui est devenue 20,2 mm, tandis que le rotor R4 a une épaisseur de 26,1 mm (rotor "moyen") et le stator latéral arrière SAR a une épaisseur de 29,0 mm (stator latéral arrière "moyen").

Comme précédemment, on constate que les ensembles de disques présentent sensiblement la même longueur totale pour chaque configuration en début d'utilisation (figures 5 et 7), et que la différence de longueur entre début et fin d'utilisation, pour chaque configuration, représente sensiblement la course d'usure des pistons d, qui est ici de 47 mm.

Conformément aux dimensions données ci-dessus, à titre d'exemple seulement, on constate que l'épaisseur du stator latéral arrière SAR est à chaque fois choisie pour être plus grande en fin d'utilisation dans la seconde configuration qu'en début d'utilisation dans la première configuration, et que, dans la variante des figures 5 à 8, l'épaisseur du rotor R4 est également choisie pour être plus grande en fin d'utilisation dans la seconde configuration qu'en début d'utilisation dans la première configuration. L'épaisseur initiale des rotors et stators du groupe central est en outre à chaque fois choisie pour que l'épaisseur de ces rotors et stators soit supérieure en fin d'utilisation dans la seconde configuration à la moitié de l'épaisseur que présentent ces mêmes rotors et stators en début d'utilisation dans la première configuration. Par ailleurs, l'épaisseur initiale du stator latéral avant SAV en début d'utilisation dans la première configuration est à chaque fois choisie pour que cette épaisseur soit supérieure en fin d'utilisation dans la seconde configuration à la moitié de l'épaisseur initiale des stators du groupe central en début d'utilisation dans la première configuration, et cette épaisseur initiale est en outre également choisie pour être supérieure en fin d'utilisation dans la seconde configuration à la moitié de l'épaisseur du disque de calage C.

Ces choix préférentiels d'épaisseurs sont intéressants pour permettre une réutilisation optimale des disques usés.

Ainsi, pour le mode d'exécution des figures 1 à 4, lorsque l'on arrive dans la situation de la figure 4, c'est-à-dire en fin d'utilisation dans la seconde configuration, il est possible de réutiliser la plupart des disques usés dans un autre ensemble de disques en début d'utilisation dans une première configuration de cet ensemble :
- le stator latéral avant SAV peut être réutilisé soit en demi-stator du groupe central (avec 5 mm de reprise pour sa face usée), soit en demi-disque de calage avec une reprise de sa face usée notée 19 (avec les dimensions indiquées ci-dessus, la reprise est de 2,25 mm) ;
- chaque rotor R1, R2, R3, R4 du groupe central peut être réutilisé en demi-rotor d'un autre groupe central avec 2,7 mm de reprise totale, c'est-à-dire 1,35 mm par face usée ;
- chaque stator S2, S3, S4 du groupe central peut être réutilisé en demi-stator, avec 2,7 mm de reprise totale, soit 1,35 mm par face usée ;
- le stator latéral arrière SAR, qui est "moyen" dans cette situation, peut être réutilisé comme stator arrière "mince", c'est-à-dire dans une situation de début d'utilisation dans la première configuration, pour un frein neuf, avec une reprise de 6,75 mm pour sa face usée.

Pour la variante des figures 5 à 8, on pourra de la même façon envisager une réutilisation des différents disques se trouvant dans la situation illustrée à la figure 8, c'est-à-dire en fin d'utilisation dans la seconde configuration, comme indiqué ci-après :
- le disque de calage n'étant pas usé peut resservir dans un autre puits de chaleur ;
- le stator latéral avant SAV peut être réutilisé soit en demi-stator central avec 10,15 mm de reprise pour sa face usée, soit en disque de calage avec 10 mm de reprise;
- les rotors R1, R2, R3 du groupe central peuvent être réutilisés en demi-rotor avec 4,3 mm de reprise totale, c'est-à-dire 2,15 mm par face usée ;
- les stators S2, S3, S4 du groupe central peuvent être réutilisés soit en demi-stator avec 4,3 mm de reprise totale, c'est-à-dire 2,15 mm par face usée, soit en disque de calage avec 4 mm de reprise totale, c'est-à-dire 2 mm par face usée ;
- le rotor R4, alors "très mince", peut être réutilisé comme demi-rotor d'un groupe arrière neuf avec 2,2 mm de reprise totale, c'est-à-dire 1,1 mm par face usée;
- le stator latéral arrière SAR peut être réutilisé de la même façon en stator latéral arrière d'un groupe arrière neuf avec 10 mm de reprise pour son unique face usée 16.

Dans tous les cas, les rotors et stators du groupe central pourront être clippés, en étant constitués de deux demi-disques sensiblement de même épaisseur, accolés et solidarisés l'un à l'autre. Par ailleurs, "le" disque de calage pourra à chaque fois être double, ou même multiple en étant alors constitué par un empilement de disques minces.

Les agencements qui viennent d'être décrits en référence aux figures 1 à 8 permettent de bien comprendre le procédé d'assemblage, c'est-à-dire d'empilement successif, de disques de frein qui fait également partie de l'invention.

Dans sa généralité, le procédé d'assemblage consiste à mettre en place un ensemble de disques comprenant successivement, de l'arrière vers l'avant, un groupe arrière comportant au moins un stator latéral arrière SAR, un groupe central de rotors et de stators Ri, Sj, et un stator latéral avant SAV, cette première configuration d'agencement étant conservée jusqu'à ce que la course maximale d'usure des pistons soit atteinte, après quoi on réinitialise les pistons de la couronne de freinage, et on remplace cet ensemble de disques usés par un autre ensemble de disques comprenant successivement, de l'arrière vers l'avant, un nouveau groupe arrière dont l'épaisseur est supérieure à l'épaisseur initiale du groupe arrière précédent, le groupe central de rotors et de stators Ri, Sj déjà partiellement usés de l'ensemble précédent, le stator latéral avant SAV déjà partiellement usé de l'ensemble précédent, et un disque de calage (simple ou multiple) en carbone C dont l'épaisseur est inférieure à la course d'usure des pistons, cette seconde configuration d'agencement étant conservée jusqu'à ce qu'une nouvelle course maximale d'usure des pistons soit atteinte.

Comme indiqué précédemment, le groupe arrière remplacé pourra être constitué exclusivement par le stator latéral arrière SAR (figures 1 à 4), ou être constitué par le stator latéral arrière SAR et le rotor R4 qui lui est directement adjacent (figures 5 à 8).

Par ailleurs, on pourra prévoir qu'en fin d'utilisation dans la seconde configuration :
- le stator latéral arrière SAR est réusiné sur sa face usée 16 pour pouvoir être réutilisé, dans un autre ensemble de disques, comme stator latéral arrière en début d'utilisation dans la première configuration ;
- le rotor R4 qui est directement adjacent au stator latéral arrière SAR, pour la variante des figures 5 à 8, est réusiné sur au moins une de ses deux faces usées 17, 18 pour pouvoir être réutilisé, dans un autre ensemble de disques, comme rotor de groupe arrière en début d'utilisation dans la première configuration ;
- l'un au moins des rotors et stators Ri, Sj du groupe central est réusiné sur ses deux faces usées pour pouvoir être réutilisé respectivement comme demi-rotor ou demi-stator dans le groupe central d'un autre ensemble de disques en début d'utilisation dans la première configuration ;
- le stator latéral avant SAV est réusiné sur sa face usée 19 pour pouvoir être réutilisé, dans un autre ensemble de disques, comme demi-stator en début d'utilisation dans la première configuration, ou encore comme disque ou demi-disque de calage en début d'utilisation dans la seconde configuration.

On est ainsi parvenu à concevoir un agencement et un procédé d'assemblage qui permettent d'optimiser le degré d'usure des disques en profitant au mieux de la course maximale d'usure des pistons, tout en conservant au maximum l'appairage des surfaces en regard (on ne réusine en effet que la face extrême arrière du groupe central de disques lors du passage de la première à la deuxième configuration), et en maintenant un équilibre thermique satisfaisant pour le puits de chaleur.

## Revendications

1. Agencement de disques de frein en carbone pour unité de freinage d'aéronef (F) comportant une alternance de stators (Si) couplés à un tube de torsion (2) et de rotors (Rj) couplés à la roue concernée et formant un groupe central de rotors et de stators (Ri,Sj), avec un stator latéral avant (SAV) à une extrémité du côté d'une couronne de freinage (3) équipée de pistons (10) capables d'une course d'usure prédéterminée (d) et un groupe arrière (SAR ; SAR, R4) comportant au moins un stator latéral arrière (SAR) à l'autre extrémité, **caractérisé en ce qu'**un disque de calage en carbone (C) couplé au tube de torsion (2) est inséré entre le stator latéral avant (SAV) et la couronne de freinage (3), l'épaisseur dudit disque de calage étant inférieure à la course d'usure (d) des pistons, et **en ce que** le stator latéral avant (SAV), le groupe central de rotors et de stators (Ri, Sj) et le groupe arrière (SAR ; SAR, R4) ont un état d'usure variable entre un premier état correspondant à une course d'usure sensiblement nulle des pistons (10) de la couronne de freinage (3) et dans lequel le stator latéral avant (SAV) et les rotors et stators du groupe central (Ri, Sj) sont partiellement usés, tandis que le groupe arrière (SAR ; SAR, R4) est non usé, et un deuxième état correspondant à une course d'usure maximale des pistons (10) de la couronne de freinage (3) et dans lequel le stator latéral avant (SAV) et les rotors et stators du groupe central (Ri, Sj) sont très usés, tandis que le groupe arrière (SAR ; SAR, R4) est partiellement usé.

2. Agencement selon la revendication 1, **caractérisé en ce que** le groupe arrière est constitué exclusivement par le stator latéral arrière (SAR).

3. Agencement selon la revendication 1, **caractérisé en ce que** le groupe arrière est constitué par le stator latéral arrière (SAR) et le rotor (R4) qui lui est directement adjacent.

4. Agencement selon l'une des revendications 1 à 3, **caractérisé en ce que** le stator latéral arrière (SAR) est relié au tube de torsion (2) par l'intermédiaire de pions (13) circonférentiellement répartis.

5. Agencement selon l'une des revendications 1 à 4, **caractérisé en ce que** les rotors et stators (Ri, Sj) du groupe central ont la même épaisseur.

6. Agencement selon l'une des revendications 1 à 5, **caractérisé en ce que** l'un au moins des disques du groupe comportant le disque de calage (C), le stator latéral avant (SAV), et les rotors et stators (Ri, Sj) du groupe central, est constitué de deux demi-disques de même épaisseur, accolés et solidarisés l'un à l'autre.

7. Procédé d'assemblage de disques de frein en carbone conformément à un agencement selon l'une au moins des revendications 1 à 6, dans lequel on met en place un ensemble de disques comprenant successivement, de l'arrière vers l'avant, un groupe arrière comportant au moins un stator latéral arrière (SAR), un groupe central de rotors et de stators (Ri, Sj), et un stator latéral avant (SAV), cette première configuration d'agencement étant conservée jusqu'à ce que la course maximale d'usure (d) des pistons (10) soit atteinte, après quoi on réinitialise les pistons (10) de la couronne de freinage (3), et on remplace cet ensemble de disques usés par un autre ensemble de disques, **caractérisé en ce qu'**après la réinitialisaiton des pistons (10) de la couronne de freinage, on met en place un autre ensemble de disques comprenant successivement, de l'arrière vers l'avant, un nouveau groupe arrière dont l'épaisseur est supérieure à l'épaisseur initiale du groupe arrière précédent, le groupe central de rotors et de stators (Ri, Sj) déjà partiellement usés de l'ensemble précédent, le stator latéral avant (SAV) déjà partiellement usé de l'ensemble précédent, et un disque de calage en carbone (C) dont l'épaisseur est inférieure à la course d'usure (d) des pistons (10), cette seconde configuration d'agencement étant conservée jusqu'à ce qu'une nouvelle course maximale d'usure (d) des pistons (10) soit atteinte.

8. Procédé selon la revendication 7, **caractérisé en ce que** le groupe arrière remplacé est constitué exclusivement par le stator latéral arrière (SAR).

9. Procédé selon la revendication 7, **caractérisé en ce que** le groupe arrière remplacé est constitué par le stator latéral arrière (SAR) et le rotor (R4) qui lui est directement adjacent.

10. Procédé selon l'une des revendications 7 à 9, **caractérisé en ce qu'**en fin d'utilisation dans la seconde configuration, le stator latéral arrière (SAR) est réusiné sur sa face usée (16) pour pouvoir être réutilisé, dans un autre ensemble de disques, comme stator latéral arrière en début d'utilisation dans la première configuration.

11. Procédé selon les revendications 7 et 9, **caractérisé en ce qu'**en fin d'utilisation dans la seconde configuration, le rotor (R4) qui est directement adjacent au stator latéral arrière (SAR) est réusiné sur au moins une de ses deux faces usées (17, 18) pour pouvoir être réutilisé, dans un autre ensemble de disques, comme rotor de groupe arrière en début d'utilisation dans la première configuration.

12. Procédé selon l'une des revendications 7 à 11, **caractérisé en ce qu'**en fin d'utilisation dans la seconde configuration, l'un au moins des rotors et stators (Ri, Sj) du groupe central est réusiné sur ses deux faces usées pour pouvoir être réutilisé respectivement comme demi-rotor ou demi-stator dans le groupe central d'un autre ensemble de disques en début d'utilisation dans la première configuration.

13. Procédé selon l'une des revendications 7 à 12, **caractérisé en ce qu'**en fin d'utilisation dans la seconde configuration, le stator latéral avant (SAV) est réusiné sur sa face usée (19) pour pouvoir être réutilisé, dans un autre ensemble de disques, comme demi-stator en début d'utilisation dans la première configuration, ou encore comme disque ou demi-disque de calage en début d'utilisation dans la seconde configuration.

## Claims

1. An arrangement of carbon brake disks for an aircraft brake unit (F) comprising stators (Si) coupled to a torsion tube (2) alternating with rotors (Rj) coupled to the corresponding wheel and forming a central group of rotors and stators (Ri, Sj), with a front lateral stator (SAV) at one end adjacent to a braking ring (3) fitted with pistons (10) capable of travelling over a predetermined wear stroke (d) and a rear group (SAR ; SAR, R4) comprising at least a rear lateral stator (SAR) at the other end, **characterized in that** a carbon spacer disk (C) coupled to the torsion tube (2) is inserted between the front lateral stator (SAV) and the braking ring (3), the thickness of said spacer disk being less than the wear stroke (d) of the pistons, and **in that** the front lateral stator (SAV), the central group of rotors and stators (Ri, Sj) and the rear group (SAR ; SAR, R4) have variable state of wear between a first state corresponding to a substantially null wear stroke of the pistons (10) of the braking ring (3) and wherein the front lateral stator (SAV) and the rotors and stators of the central group (Ri, Sj) are partially worn, whereas the rear group (SAR ; SAR, R4) is non worn, and a second state corresponding to a maximal wear stroke of the pistons (10) of the braking ring (3) and wherein the front lateral stator (SAV) and the rotors and stators of the central group (Ri, Sj) are very worn, whereas the rear group (SAR ; SAR, R4) is partially worn.

2. An arrangement according to claim 1, **characterized in that** the rear group is constituted by the rear lateral stator (SAR) on its own.

3. An arrangement according to claim 1, **characterized in that** the rear group is constituted by the rear lateral stator (SAR) together with the rotor (R4) which is directly adjacent thereto.

4. An arrangement according to any one of claims 1 to 3, **characterized in that** the rear lateral stator (SAR) is connected to the torsion tube (2) via circumferentially distributed studs (13).

5. An arrangement according to any one of claims 1 to 4, **characterized in that** the rotors and stators (Ri, Sj) of the central group are of the same thickness.

6. An arrangement according to any one of claims 1 to 5, **characterized in that** at least one of the disks of the group comprising the spacer disk (C), the front lateral stator (SAV), and the rotors and stators (Ri, Sj) of the central group is constituted by two same-thickness half-disks put together and secured to each other.

7. A method of assembling carbon brake disks in an arrangement according to at least one of claims 1 to 6,wherein one puts into place a set of disks comprising, in succession, forwards from the back: a rear group comprising at least a rear lateral stator (SAR); a central group of rotors and stators (Ri, Sj); and a front lateral stator (SAV), said first configuration of the arrangement being conserved until the maximum wear stroke (d) of the pistons (10) has been reached, after which the pistons (10) of the brake ring (3) are reinitialized, and said set of worn disks is replaced by another set of disks, **characterized in that** after the reinitialization of the pistons (10) of the braking ring, one puts into place another set of disks comprising in succession, forwards from the back, a new rear group of thickness greater than the initial thickness of the preceding rear group; the central group comprising the already part-worn rotors and stators (Ri, Sj) of the preceding set; the already part-worn front lateral stator (SAV) of the preceding set; and a carbon spacer disk (C) of thickness that is less than the wear stroke (d) of the pistons (10), said second configuration of the arrangement being conserved until a new maximum wear stroke (d) of the pistons (10) is reached.

8. A method according to claim 7, **characterized in that** the replaced rear group is constituted by the rear lateral stator (SAR) on its own.

9. A method according to claim 7, **characterized in that** the replaced rear group is constituted by the rear lateral stator (SAR) together with the rotor (R4) which is directly adjacent thereto.

10. A method according to any one of claims 7 to 9, **characterized in that**, at the end of use in the second configuration, the rear lateral stator (SAR) has its worn face (16) re-machined so as to be capable of being reused in another set of disks as the rear lateral stator at the beginning of use in the first configuration.

11. A method according to claims 7 and 9, **characterized in that**, at the end of use in the second configuration, the rotor (R4) which is directly adjacent to the rear lateral stator (SAR) has at least one of its two worn faces (17, 18) re-machined so as to be capable of being reused in another set of disks as the rotor of the rear group at the beginning of use in the first configuration.

12. A method according to any one of claims 7 to 11, **characterized in that** at the end of use in the second configuration, at least one of the rotors and stators (Ri, Sj) of the central group is re-machined on both worn faces so as to be capable of being reused respectively as a half-rotor or as a half-stator in the central group of another set of disks at the beginning of use in the first configuration.

13. A method according to any one of claims 7 to 12, **characterized in that** at the end of use in the second configuration, the front lateral stator (SAV) has its worn face (19) re-machined so as to be capable of being reused in another set of disks as a half-stator at the beginning of use in the first configuration, or as a spacer disk or half-disk at the beginning of use in the second configuration.

## Patentansprüche

1. Anordnung von Kohlenstoffbremsscheiben für eine Bremseinheit eines Luftfahrzeugs (F), umfassend eine alternierende Anordnung von Statorscheiben (Si), die an ein Torsionsrohr (2) gekoppelt sind, und Rotorscheiben (Rj), die an das betreffende Rad gekoppelt sind, und die eine zentrale Gruppe aus Rotorscheiben und Statorscheiben (Ri, Sj) bildet, mit einer seitlichen vorderen Statorscheibe (SAV) an einem Ende auf der Seite eines Bremskranzes (3), der mit Kolben (10) versehen ist, die einen vorgegebenen Abnutzungshub (d) ausführen können, und mit einer hinteren Gruppe (SAR; SAR, R4) am anderen Ende, die mindestens eine seitliche hintere Statorscheibe (SAR) enthält, **dadurch gekennzeichnet, daß** eine Kohlenstoffspannscheibe (C), die mit dem Torsionsrohr (2) verbunden ist, zwischen der seitlichen vorderen Statorscheibe (SAV) und dem Bremskranz (3) eingefügt wird, wobei die Dicke dieser Spannscheibe geringer ist als der Abnutzungshub (d) der Kolben, und daß die seitliche vordere Statorscheibe (SAV), die zentrale Gruppe aus Rotorscheiben und Statorscheiben (Ri, Sj) und die hintere Gruppe (SAR; SAR, R4) einen Abnutzungszustand haben, der zwischen einem ersten Zustand, der einem im wesentlichen nicht vorhandenen Abnutzungshub der Kolben (10) des Bremskranzes (3) entspricht und in dem die seitliche vordere Statorscheibe (SAV) und die Rotorscheiben und Statorscheiben der zentralen Gruppe (Ri, Sj) teilweise abgenutzt werden, während die hintere Gruppe (SAR; SAR, R4) nicht abgenutzt wird, und einem zweiten Zustand, der einem maximalen Abnutzungshub der Kolben (10) des Bremskranzes (3) entspricht und in dem die seitliche vordere Statorscheibe (SAV) und die Rotorscheiben und Statorscheiben der zentralen Gruppe (Ri, Sj) sehr abgenutzt werden, während die hintere Gruppe (SAR; SAR, R4) teilweise abgenutzt wird, wechselt.

2. Anordnung nach Anspruch 1, **dadurch gekennzeichnet, daß** die hintere Gruppe ausschließlich aus der seitlichen hinteren Statorscheibe (SAR) gebildet ist.

3. Anordnung nach Anspruch 1, **dadurch gekennzeichnet, daß** die hintere Gruppe aus der seitlichen hinteren Statorscheibe (SAR) und der Rotorscheibe (R4) gebildet ist, die direkt an diese angrenzt.

4. Anordnung nach einem der Ansprüche 1 bis 3, **dadurch gekennzeichnet, daß** die seitliche hintere Statorscheibe (SAR) über entlang dem Umfang verteilte Metallstücke (13) mit dem Torsionsrohr (2) verbunden ist.

5. Anordnung nach einem der Ansprüche 1 bis 4, **dadurch gekennzeichnet, daß** die Rotorscheiben und die Statorscheiben (Ri, Sj) der zentralen Gruppe die gleiche Dicke haben.

6. Anordnung nach einem der Ansprüche 1 bis 5, **dadurch gekennzeichnet, daß** mindestens eine der Scheiben der Gruppe, die aus der Spannscheibe (C), der seitlichen vorderen Statorscheibe (SAV) und den Rotorscheiben und Statorscheiben (Ri, Sj) der zentralen Gruppe besteht, aus zwei halben Scheiben gleicher Dicke gebildet ist, die nebeneinandergesetzt und miteinander verbunden sind.

7. Verfahren zur Montage von Kohlenstoffbremsscheiben gemäß einer Anordnung nach mindestens einem der Ansprüche 1 bis 6, bei dem man eine Einheit aus Scheiben montiert, die nacheinander von hinten nach vorne eine hintere Gruppe mit mindestens einer seitlichen hinteren Statorscheibe (SAR), eine zentrale Gruppe aus Rotorscheiben und Statorscheiben (Ri, Sj) und eine seitliche vordere Statorscheibe (SAV) enthält, wobei diese erste Form der Anordnung beibehalten wird, bis der maximale Abnutzungshub (d) der Kolben (10) erreicht ist, man danach die Kolben (10) des Bremskranzes (3) reinitialisiert, und man diese Einheit aus abgenutzten Scheiben durch eine andere Einheit aus Scheiben ersetzt, **dadurch gekennzeichnet, daß** man nach dem Reinitialisieren der Kolben (10) des Bremskranzes eine andere Einheit aus Scheiben montiert, die nacheinander von hinten nach vorne eine neue hintere Gruppe, deren Dicke über der Anfangsdicke der vorhergehenden hinteren Gruppe liegt, die bereits teilweise abgenutzte zentrale Gruppe aus Rotorscheiben und Statorscheiben (Ri, Sj) der vorhergehenden Einheit, die bereits teilweise abgenutzte seitliche vordere Statorscheibe (SAV) der vorhergehenden Einheit und eine Spannscheibe aus Kohlenstoff (C) enthält, deren Dicke unter dem Abnutzungshub (d) der Kolben (10) liegt, wobei diese zweite Form der Anordnung beibehalten wird, bis ein neuer maximaler Abnutzungshub (d) der Kolben (10) erreicht wird.

8. Verfahren nach Anspruch 7, **dadurch gekennzeichnet, daß** die ausgetauschte hintere Gruppe ausschließlich aus der seitlichen hinteren Statorscheibe (SAR) gebildet ist.

9. Verfahren nach Anspruch 7, **dadurch gekennzeichnet, daß** die ausgetauschte hintere Gruppe aus der seitlichen hinteren Statorscheibe (SAR) und der Rotorscheibe (R4) gebildet ist, die direkt an diese angrenzt.

10. Verfahren nach einem der Ansprüche 7 bis 9, **dadurch gekennzeichnet, daß** am Ende der Nutzung in der zweiten Anordnungsform, die seitliche hintere Statorscheibe (SAR) auf ihrer abgenutzten Seite (16) überarbeitet wird, um erneut in einer anderen Einheit aus Scheiben als seitliche hintere Statorscheibe zu Beginn der Nutzung in der ersten Anordnungsform verwendet werden zu können.

11. Verfahren nach den Ansprüchen 7 und 9, **dadurch gekennzeichnet, daß** am Ende der Nutzung in der zweiten Anordnungsform die Rotorscheibe (R4), die direkt an die seitliche hintere Statorscheibe (SAR) angrenzt, auf mindestens einer ihrer beiden abgenutzten Seiten (17, 18) überarbeitet wird, um erneut in einer anderen Einheit aus Scheiben als Rotorscheibe der hinteren Gruppe zu Beginn der Nutzung in der ersten Anordnungsform verwendet werden zu können.

12. Verfahren nach einem der Ansprüche 7 bis 11, **dadurch gekennzeichnet, daß** am Ende der Nutzung in der zweiten Anordnungsform mindestens eine der Rotorscheiben und Statorscheiben (Ri, Sj) der zentralen Gruppe auf ihren beiden abgenutzten Seiten überarbeitet wird, um erneut als halbe Rotorscheibe bzw. halbe Statorscheibe in der zentralen Gruppe einer weiteren Einheit aus Scheiben zu Beginn der Nutzung in der ersten Anordnungsform verwendet werden zu können.

13. Verfahren nach einem der Ansprüche 7 bis 12, **dadurch gekennzeichnet, daß** am Ende der Nutzung in der zweiten Anordnungsform die seitliche vordere Statorscheibe (SAV) auf ihrer abgenutzten Seite (19) überarbeitet wird, um erneut in einer anderen Einheit aus Scheiben als halbe Statorscheibe zu Beginn der Nutzung in der ersten Anordnungsform oder auch als Spannscheibe oder halbe Spannscheibe zu Beginn der Nutzung in der zweiten Anordnungsform verwendet werden zu können.
